(19) Europäisches Patentamt
European Patent Office
Office européen des brevets

(11) EP 2 937 426 A1

# (12) EUROPÄISCHE PATENTANMELDUNG

(43) Veröffentlichungstag:
**28.10.2015 Patentblatt 2015/44**

(51) Int Cl.:
***C14C 3/32** (2006.01)* ***C14C 3/00** (2006.01)*
***C09H 3/00** (2006.01)*

(21) Anmeldenummer: **14166045.6**

(22) Anmeldetag: **25.04.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**50569 Köln (DE)**

(72) Erfinder:
- **Hufschmidt, Jan**
  **90763 Fürth (DE)**
- **Westerholt, Antje**
  **91056 Erlangen (DE)**
- **Bösmann, Andreas**
  **91093 Heßdorf (DE)**
- **Wasserscheid, Peter**
  **91054 Erlangen (DE)**
- **Kuhlmann, Sven**
  **50737 Köln (DE)**
- **Reiners, Jürgen**
  **51373 Leverkusen (DE)**
- **Rabe, Volker**
  **51375 Levekusen (DE)**

## (54) Verfahren zur Entchromung von Chrom-haltigem, kollagenhaltigem Material

(57) Verfahren zur Entchromung von Chrom-haltigem, kollagenhaltigem Material, bevorzugt Chrom-haltigem Leder, unter Verwendung eines Extraktionsmittels, dadurch gekennzeichnet, dass das Extraktionsmittel eine Verbindung der Formel I oder eine Mischung aus mehreren Verbindungen der Formel I ist:

$K^+ A^-$ Formel I

wobei
$K^+$
ein Kation ist, welches ausgewählt ist aus der Gruppe bestehend aus Ammonium-, Iminium-, Phosphonium- und Sulfonium-Ion, und
$A^-$
ein Anion ist, welches ausgewählt ist aus der Gruppe bestehend aus Phosphat-, Phosphonat-, Phosphinat-, Borat-, Sulfat-, Sulfonat-, Amid-, Imid-, Carben-, Carboxylat- und Carbonat-Ion, bevorzugt ausgewählt aus der Gruppe bestehend aus Phosphat-, Phosphonat-, Phosphinat-, Thiophosphat-, Thiophosphonat- und Thiophosphinat-Ion.

EP 2 937 426 A1

**Beschreibung**

Die Erfindung betrifft ein Verfahren zur Entchromung von Chrom-haltigem, kollagenhaltigem Material, bevorzugt von Chrom-haltigem Leder, sowie das nach dem erfindungsgemäßen Verfahren erhaltene kollagenhaltige Material und dessen Verwendung im Bereich der Kosmetik, der Medizin, der Nahrungsmittel und/oder zur Herstellung von Hilfsmitteln, bevorzugt von Lederhilfsmitteln.

Bei der Lederherstellung fallen als Hobelspäne kleine Lederstücke, sogenannte Lederfalzspäne an, die hauptsächlich aus kollagenhaltigem Material bestehen. Sofern die Gerbung des Leders zuvor mittels eines Chromgerbstoffes erfolgte, enthält das resultierende gegerbte Leder, auch als Wet-Blue bezeichnet, neben dem Kollagen, das ein Hauptbestandteil der Haut ist, einen hohen, fest eingebundenen Anteil an Chrom (ca. 2 bis 4 Gew.-%). Im gegerbten Leder sollten nach einer ordnungsgemäßen Gerbung nur Chrom-Verbindungen mit Chrom in der Oxidationsstufe (III) vorliegen, die als nicht gesundheitsgefährdend eingestuft sind. Bei unsachgemäßer Gerbung oder mangelnder Nachbehandlung des Leders bzw. der Falzspäne mit stark oxidierenden Chemikalien können hochtoxische Chrom-Verbindungen mit Chrom in der Oxidationsstufe (VI) entstehen.

Da die Chromgerbung die am weitesten verbreitete Gerbmethode darstellt, fallen große Abfallmengen der zuvor beschriebenen Lederfalzspäne an (allein in Deutschland ca. 17.000 t pro Jahr). Da das Recycling des Chrom(III) aus den großen Abfallmengen nur mit hohem Aufwand möglich ist, werden Wet-Blue-Falzspäne als Sondermüll deponiert und entsorgt, zu Lederfaserstoff gepresst oder unter kontrollierten Bedingungen verbrannt, was jedoch zu Lasten der Umwelt geht. Zudem geht durch die Entsorgung eine große Menge an Kollagen verloren, welches das in größter Menge vorhandene tierische Protein darstellt und welches ca. 30 % des gesamten Proteins im Tierkörper ausmacht und vor allem in Haut und Knochen vorhanden ist. Ohne die Verunreinigung durch Chrom könnte das Kollagen Anwendung im Bereich der Kosmetik, Medizin sowie Nahrungsmitteln für Mensch und Tier finden. Auch eine Rückgewinnung des Chroms wäre sowohl von Vorteil für die Umwelt als auch effizient hinsichtlich der Verwendung des Chroms und somit auch kostengünstig.

Aus den zuvor aufgeführten Gründen besteht ein Interesse an der Entchromung von Chrom-haltigem, kollagenhaltigem Material, bevorzugt von Chrom-haltigem Leder. Bezüglich der Fest-Flüssig-Extraktion, in diesem Fall demnach der Extraktion des Chroms mittels eines Lösungsmittels aus den festen, Chrom-haltigen Lederfalzspänen, besteht das Problem, dass die Lederfalzspäne von Lösungsmittel zwar leicht durchdrungen werden können, das Chrom(III) allerdings nicht von ihnen herausgelöst werden kann. Um es zu mobilisieren und aus der festen, stabilen Matrix lösen zu können, wird diese in gängigen Verfahren zunächst zersetzt und die Kollagenstruktur somit aufgelöst.

Gängige Methoden der Zersetzung sind die Zersetzung mit Säuren/ Basen und der mikrobielle/ enzymatische Abbau der Falzspäne, wobei diese Schiritte meist in einem aufwendigen, mehrstufigen Prozess miteinander kombiniert sind (so z.B. beschrieben in Cabeza, L.F., Waste Management, 1998, 18, S. 211-218). In einem solchen Prozess werden die Lederfalzspäne zunächst mit Magnesiumoxid zersetzt und neben Gelatine ein chromhaltiger Rückstand erhalten. Dieser wird der durch Enzyme zu Kollagenhydrolysat und chromhaltigem Feststoff zersetzt. Der Feststoff wird in Schwefelsäure aufgelöst und anschließend in zwei Stufen mit Natriumhydroxid umgesetzt, wobei neben Abfallprodukten auch Chrom(III)oxid anfällt. Das Chrom(III)oxid kann anschließend als Pigment verwendet werden oder wieder zu Chrom(III)sulfat umgesetzt und als Gerbstoff verwendet werden. Das hydrolysierte Kollagen und die Gelatine können je nach ihrer Reinheit beispielsweise zu Klebstoff, Düngemitteln oder Tierfutter verarbeitet werden.

Dieses Verfahren weist jedoch einige Nachteile auf: da zunächst die Kollagenstruktur komplett zerstört wird, liegt das Kollagen nicht mehr als Feststoff, sondern als Emulsion mit Wasser vor. Es handelt sich somit nicht mehr um eine Fest-Flüssig-Extraktion bezüglich des Kollagens, sodass von den Vorteilen einer Fest-Flüssig-Extraktion, wie einfache Phasentrennungen und Waschvorgänge, nicht mehr profitiert werden kann. Des Weiteren werden während eines solchen Verfahrens große Mengen Wasser verbraucht, welches dabei mit Chrom(III) kontaminiert wird. Das als Feststoff anfallende Chrom(III)oxid erfordert zudem mehrfache Filtrationsschritte, um von der Emulsion abgetrennt werden zu können.

Viele der literaturbekannten Verfahren zur Entchromung richten sich auf die Extraktion von Chrom(III) aus wässrigen Lösungen mittels eines in einem organischen Lösungsmittel gelösten Extraktionsmittels in einer Flüssig-Flüssig-Extraktion, so z.B. in EP 0132906 A2. Der Nachteil einer solchen Flüssig-Flüssig-Extraktion zur Entchromung ist, dass es zu Durchmischungsproblemen bei der Extraktion von der wässrigen, Chrom(III)-haltigen Phase mit der organischen, das Extraktionsmittel enthaltenden Phase bzw. zu Problemen bei der anschließenden Trennung dieser Phasen kommt. Auch ist bei einem Verfahren wie in EP 0132906 A2 beschrieben keine Rückgewinnung des Chroms vorgesehen.

In der Anmeldung WO93/14170 A1 wird ein Verfahren zur Entfernung von Metallen aus proteinbasierten Materialen offenbart. Hierbei wird das Protein, das in Beispiel 1 der WO93/14170 A1 ein Wet-Blue und somit kollagenhaltig ist, extremen Anforderungen ausgesetzt: zunächst wird es der Behandlung mit einer sehr starken Säure unterzogen, und im Anschluss mit einer $Co^{60}$-Quelle oder einer Strahlungsquelle zwecks "Crosslinking" bestrahlt (z.B. UV, Ionisierende Strahlung). Nach Entfernung des sauren Mediums findet eine Basifizierung des Proteins mit Natriumhydroxid zur

Herauslösung des Chroms mittels Redox-Reaktion und anschließend eine Behandlung mit Wasserstoffperoxid statt. Unter den zu Beginn des Verfahrens sehr sauren Bedingungen wird die Quervernetzung des Kollagens aufgelöst und die Kollagenstruktur zumindest teilweise zerstört. Im Anschluss wird zur Verhinderung einer weiteren Hydrolyse des labilen Kollagens dessen Stabilisierung durch radikalische Quervernetzung beabsichtigt. Nach der Basifizierung wird das noch im Kollagen verbliebene, unlösliche Chrom(III) durch Wasserstoffperoxid in lösliches Chromat mit Chrom in der Oxidationsstufe (VI) überführt.

Das Kollagen ist demnach während des gesamten Verfahrens extremen Bedingungen ausgesetzt, die das Kollagen in der Regel schädigen. So kommt es beispielsweise bei der Behandlung im stark Sauren zur Hydrolyse der Peptidbindungen des Kollagens und somit zur Bildung von Proteinfragmenten. Die Behandlung mit Wasserstoffperoxid führt in der Regel zur Oxidation der Seitenketten der Aminosäuren. Der Erhalt eines Kollagens mit intakter Kollagenstruktur ist unter den in dieser Anmeldung angegebenen extremen Bedingungen problematisch. Zudem ist das im letzten Schritt entstehende Chrom(VI) toxisch und mutagen, wodurch hinsichtlich der Durchführung des Verfahrens hohe Anforderungen an die Produktionsanlagen und das Personal bestehen. Sofern Chrom(VI)-Rückstände im Kollagen verbleiben, ist eine Wiederverwendung des auf diese Weise zurückgewonnenen Kollagens z.B. in der Kosmetik nicht möglich.

Das in WO93/14170 A1 offenbarte Verfahren sieht zudem keine Rückgewinnung des Chroms vor.

Somit war es die Aufgabe der vorliegenden Erfindung, ein Verfahren zur Entchromung von Chrom-haltigem, kollagenhaltigem Material, bevorzugt von Chrom-haltigem Leder, bereitzustellen, welches die Nachteile der zuvor genannten Verfahren nicht aufweist, ökonomisch ist und eine vereinfachte Abtrennung des Chroms von Chrom-haltigem, kollagenhaltigem Material, bevorzugt von Chrom-haltigem Leder, vorsieht. Vorzugsweise sollte das Verfahren einen geringen Verbrauch von Wasser aufweisen sowie vorzugsweise ohne organische Lösungsmittel auskommen. Zudem war es ein Ziel, die Entchromung vorzugsweise unter milden Bedingungen durchzuführen, um die Rückgewinnung eines intakten kollagenhaltigen Materials zu ermöglichen. Das erhaltene kollagenhaltige Material sollte darüber hinaus vorzugsweise einen Chrom(VI)-Gehalt von weniger als 0,0003 Gew.-% sowie vorzugsweise einen Chrom(III)-Gehalt von weniger als 1,5 Gew.-% aufweisen, bezogen auf die Masse des kollagenhaltigen Materials, und vorzugsweise in Bereichen der Kosmetik, Medizin, Nahrungsmittel und/oder zur Herstellung von Hilfsmitteln, bevorzugt von Lederhilfsmitteln. eingesetzt werden können.

Zudem war es ein weiteres Ziel der vorliegenden Erfindung, dem Verfahren der Entchromung eine Rückgewinnung des Extraktionsmittels anschließen zu können, sodass dieses erneut in dem Verfahren zur Entchromung eingesetzt werden kann. Des Weiteren war es ein Ziel, dem Verfahren der Entchromung eine Rückgewinnung des Chroms anschließen zu können, sodass dieses nicht mehr entsorgt werden muss, sondern in einem Gerbprozess erneut eingesetzt werden kann.

Überraschend wurde gefunden, dass die Lösung der gestellten Aufgabe gelingt durch ein Verfahren zur Entchromung von Chrom-haltigem, kollagenhaltigem Material, bevorzugt Chrom-haltigem Leder, unter Verwendung eines Extraktionsmittels, dadurch gekennzeichnet, dass das Extraktionsmittel eine Verbindung der Formel I oder eine Mischung aus mehreren Verbindungen der Formel I ist:

$$K^+ A^- \qquad \text{Formel I}$$

wobei

- $K^+$ ein Kation ist, welches ausgewählt ist aus der Gruppe bestehend aus Ammonium-, Iminium-, Phosphonium- und Sulfonium-Ion, und
- $A^-$ ein Anion ist, welches ausgewählt ist aus der Gruppe bestehend aus Phosphat-, Phosphonat-, Phosphinat-, Borat-, Sulfat-, Sulfonat-, Amid-, Imid-, Carben-, Carboxylat- und Carbonat-Ion, bevorzugt ausgewählt aus der Gruppe bestehend aus Phosphat-, Phosphonat-, Phosphinat-, Thiophosphat-, Thiophosphonat- und Thiophosphinat-Ion.

**<u>Extraktionsmittel</u>**

Bevorzugte Kationen $K^+$ des Extraktionsmittels der Formel I stellen bevorzugt die folgenden Kationen dar:

- Phosphonium- oder Ammonium-Ionen der allgemeinen Struktur

$$[XRR'R''R''']^+$$

wobei X = P oder N, und R, R', R" und R'" unabhängig voneinander ausgewählt sind aus der Gruppe G, oder R und R'

gemeinsam mit dem X-Atom, an das sie gebunden sind, einen gegebenenfalls aromatischen Heterozyklus ausbilden, der bevorzugt fünf- bis acht-gliedrig ist, der neben Kohlenstoff das X-Atom und gegebenenfalls weitere Heteroatome enthält, der gegebenenfalls eine oder mehrere Doppel- und/oder Dreifachbindungen enthält, und der substituiert oder unsubstituiert ist, wobei mögliche Substituenten bevorzugt ausgewählt sind aus der Gruppe bestehend aus Alkyl, bevorzugt $C_1$-$C_4$-Alkyl, Aryl, bevorzugt $C_5$- und $C_6$-Aryl, Hydroxy, Carboxyl, Halogen, bevorzugt Fluor und Chlor, Alkoxy, bevorzugt $C_1$-$C_4$-Alkoxy, und Cyano.

Die Gruppe G besteht aus Wasserstoff, $C_1$-$C_{20}$-Alkyl, das substituiert oder unsubstituiert ist und gegebenenfalls Polyalkylenglykol-, Polyurethan- und/oder Polyestereinheiten enthält, $C_2$-$C_{20}$-Alkenyl, das substituiert oder unsubstituiert ist und eine oder mehrere Doppelbindungen enthält, $C_2$-$C_{20}$-Alkinyl, das substituiert oder unsubstituiert ist und eine oder mehrere Dreifachbindungen enthält, $C_3$-$C_{20}$-Aryl, das substituiert oder unsubstituiert ist, Heteroaryl, das substituiert oder unsubstituiert ist, fünf- bis zwanzig-gliedrig ist und ein oder mehrere Heteroatome enthält, $C_3$-$C_{14}$-Cycloalkyl, das substituiert oder unsubstituiert ist, Heterocycloalkyl, das substituiert oder unsubstituiert ist, drei- bis acht-gliedrig ist und ein oder mehrere Heteroatome enthält, Polyalkylenglykolyl, Cyano, Dialkylsuccinat, unsubstituiertem Alkylsulfonyl und halogeniertem Alkylsulfonyl.

Die Alkyl-, Alkenyl- und Alkinyl-Reste der Gruppe G können linear oder verzweigt vorliegen.

Geeignete Substituenten der Gruppe G sind bevorzugt ausgewählt aus der Gruppe bestehend aus $C_1$-$C_4$-Alkyl, Aryl, bevorzugt $C_5$- und $C_6$-Aryl, Hydroxy, Carboxyl, Halogen, bevorzugt Fluor und Chlor, Alkoxy, bevorzugt $C_1$-$C_4$-Alkoxy, und Cyano.

Besonders bevorzugte Phosphonium-Ionen sind quartäre Phosphonium-Ionen, besonders bevorzugt Tetramethylphosphonium-Ion, Tetraethylphosphonium-Ion, Tetrapropylphosphonium-Ion und Tetrabutylphosphonium-Ion.

Besonders bevorzugte Ammonium-Ionen sind Pyrrolidinium-Ion, Tetraethylammonium-Ion, (2-Hydroxyethyl)trimethylammonium-Ion (Cholin), Tetrapropylammonium-Ion, Tetramethylammonium-Ion, Tetrabutylammonium-Ion und Ammonium-Ion der Formel $[NH_4]^+$, besonders bevorzugt Ammonium-Ion der Formel $[NH_4]^+$.

Weitere bevorzugte Kationen $K^+$ des Extraktionsmittels der Formel I stellen die folgenden Kationen dar:

- Iminium-Ionen der allgemeinen Struktur

$$[RR'N{=}CR''R''']^+$$

wobei R, R', R" und R'" unabhängig voneinander ausgewählt sind aus der Gruppe G, oder R und R" gemeinsam mit dem N- und dem C-Atom, an die sie gebunden sind, einen gegebenenfalls aromatischen Heterozyklus ausbilden, der bevorzugt fünf- bis acht-gliedrig ist, der neben Kohlenstoff das N-Atom und gegebenenfalls weitere Heteroatome enthält, der gegebenenfalls eine oder mehrere Doppel- und/oder Dreifachbindungen enthält, und der substituiert oder unsubstituiert ist, wobei mögliche Substituenten bevorzugt ausgewählt sind aus der Gruppe bestehend aus Alkyl, bevorzugt $C_1$-$C_4$-Alkyl, Aryl, bevorzugt $C_5$- und $C_6$-Aryl, Hydroxy, Carboxyl, Halogen, bevorzugt Fluor und Chlor, Alkoxy, bevorzugt $C_1$-$C_4$-Alkoxy, und Cyano.

Besonders bevorzugte Iminium-Ionen sind Pyridinium-Ion und Imidazolium-Ion.

Weitere bevorzugte Kationen $K^+$ des Extraktionsmittels der Formel I stellen die folgenden Kationen dar:

- Sulfonium-Ionen der allgemeinen Struktur

$$[SRR'R'']^+$$

wobei R, R' und R" unabhängig voneinander ausgewählt sind aus der Gruppe G, oder R und R' gemeinsam mit dem S-Atom, an das sie gebunden sind, einen gegebenenfalls aromatischen Heterozyklus ausbilden, der bevorzugt fünf- bis acht-gliedrig ist, der neben Kohlenstoff das S-Atom und gegebenenfalls weitere Heteroatome enthält, der gegebenenfalls eine oder mehrere Doppel- und/oder Dreifachbindungen enthält, und der substituiert oder unsubstituiert ist, wobei mögliche Substituenten bevorzugt ausgewählt sind aus der Gruppe bestehend aus Alkyl, bevorzugt $C_1$-$C_4$-Alkyl, Aryl, bevorzugt $C_5$- und $C_6$-Aryl, Hydroxy, Carboxyl, Halogen, bevorzugt Fluor und Chlor, Alkoxy, bevorzugt $C_1$-$C_4$-Alkoxy, und Cyano.

Bevorzugte Anionen $A^-$ des Extraktionsmittels der Formel I stellen bevorzugt die folgenden Anionen dar:

- die Phosphat-, Phosphonat- und Phosphinat-Ionen der allgemeinen Strukturen

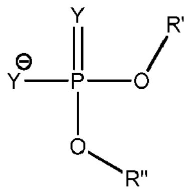 oder 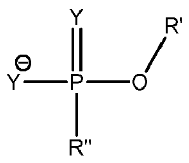 oder 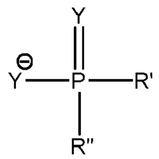

wobei Y = O oder S ist, und R' und R" unabhängig voneinander ausgewählt sind aus der Gruppe G, oder R' und R" gemeinsam mit der Einheit O-P-O oder P-O oder dem P-Atom, an die/das sie gebunden sind, einen gegebenenfalls aromatischen Heterozyklus ausbilden, der bevorzugt fünf- bis acht-gliedrig ist, der neben Kohlenstoff und der Einheit O-P-O oder P-O oder dem P-Atom gegebenenfalls weitere Heteroatome enthält, der gegebenenfalls eine oder mehrere Doppel- und/oder Dreifachbindungen enthält, und der substituiert oder unsubstituiert ist, wobei mögliche Substituenten bevorzugt ausgewählt sind aus der Gruppe bestehend aus Alkyl, bevorzugt $C_1$-$C_4$-Alkyl, Aryl, bevorzugt $C_5$- und $C_6$-Aryl, Hydroxy, Carboxyl, Halogen, bevorzugt Fluor und Chlor, Alkoxy, bevorzugt $C_1$-$C_4$-Alkoxy, und Cyano.

Besonders bevorzugte Phosphat-, Phosphonat- bzw. Phosphinat-Ionen mit den zuvor definierten Resten sind Phosphate, wie zum Beispiel Bis(2-ethylhexyl)phosphat, Dihexylphosphat, Dibutylphosphat, Diethylphosphat, Dimethylphosphat, Diethyldithiophosphat und Polyalkylenglykolphosphate, Phosphonate, wie zum Beispiel Methylbutylphosphonat, Methyloctylphosphonat und Methylpolyalkylenglykolphosphonate, Phosphinate, wie zum Beispiel Bis(2,4,4-trimethylpentyl)phosphinat, Diisobutyldithiophosphinat, Diisooctyldithiophosphinat und Dibutylphosphinat. Ganz besonders bevorzugte Anionen A- des Extraktionsmittels der Formel I sind Dibutylphosphat, Bis(2-ethylhexyl)phosphat und Bis(2,4,4-trimethylpentyl)phosphinat, ganz besonders besonders bevorzugt Bis(2,4,4-trimethylpentyl)phosphinat.

Weitere bevorzugte Anionen $A^-$ des Extraktionsmittels der Formel I stellen die folgenden Anionen dar:

- die Sulfat- und Sulfonat-Ionen der allgemeinen Strukturen

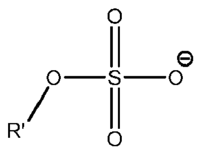 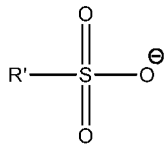

wobei R' ausgewählt ist aus der Gruppe G.

Besonders bevorzugte Sulfat- und Sulfonat-Ionen mit den zuvor definierten Resten sind Sulfate, wie zum Beispiel Dodecylsulfat, Decylsulfat, Octylsulfat, Heptylsulfat, Hexylsulfat, Butylsulfat, Ethylsulfat und Methylsulfat, Sulfonate, wie zum Beispiel Dodecylsulfonat, Decylsulfonat, Octylsulfonat, Heptylsulfonat, Hexylsulfonat, Butylsulfonat, Ethylsulfonat, Methylsulfonat, Paratolylsulfonat und Dioctylsulfosuccinat.

Weitere bevorzugte Anionen $A^-$ des Extraktionsmittels der Formel I stellen die folgenden Anionen dar:

- die Amid-Ionen der allgemeinen Struktur

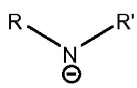

wobei R und R' unabhängig voneinander ausgewählt sind aus der Gruppe G, oder R und R' gemeinsam mit dem N-Atom, an das sie gebunden sind, einen gegebenenfalls aromatischen Heterozyklus ausbilden, der bevorzugt fünf- bis acht-gliedrig ist, der neben Kohlenstoff das N-Atom und gegebenenfalls weitere Heteroatome enthält, der gegebenenfalls eine oder mehrere Doppel- und/oder Dreifachbindungen enthält, und der substituiert oder unsubstituiert ist, wobei mögliche Substituenten bevorzugt ausgewählt sind aus der Gruppe bestehend aus Alkyl, bevorzugt $C_1$-$C_4$-Alkyl, Aryl, bevorzugt $C_5$- und $C_6$-Aryl, Hydroxy, Carboxyl, Halogen, bevorzugt Fluor und Chlor, Alkoxy, bevorzugt $C_1$-$C_4$-Alkoxy, und Cyano.

Besonders bevorzugte Amid-Ionen mit den zuvor definierten Resten sind Dicyanamide, Bis(trifluoromethylsulfonyl)amid und Bis(pentafluoroethylsulfonyl)amid.

Weitere bevorzugte Anionen $A^-$ des Extraktionsmittels der Formel I stellen die folgenden Anionen dar:

- die Carben-Ionen der allgemeinen Struktur

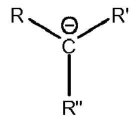

wobei R, R' und R" unabhängig voneinander ausgewählt sind aus der Gruppe G, oder R und R' gemeinsam mit dem C-Atom, an das sie gebunden sind, einen gegebenenfalls aromatischen Zyklus ausbilden, der bevorzugt fünf- bis acht-gliedrig ist, der neben Kohlenstoff gegebenenfalls Heteroatome enthält, der gegebenenfalls eine oder mehrere

Doppel- und/oder Dreifachbindungen enthält, und der substituiert oder unsubstituiert ist, wobei mögliche Substituenten bevorzugt ausgewählt sind aus der Gruppe bestehend aus Alkyl, bevorzugt $C_1$-$C_4$-Alkyl, Aryl, bevorzugt $C_5$- und $C_6$-Aryl, Hydroxy, Carboxyl, Halogen, bevorzugt Fluor und Chlor, Alkoxy, bevorzugt $C_1$-$C_4$-Alkoxy, und Cyano.

Besonders bevorzugte Carben-Ionen mit den zuvor definierten Resten sind Tricyanomethid und Carbene des Arduengo Typs.

Weitere bevorzugte Anionen $A^-$ des Extraktionsmittels der Formel I stellen die folgenden Anionen dar:

- die Carboxylat-Ionen der allgemeinen Struktur

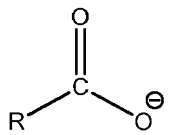

wobei R ausgewählt ist aus der Gruppe G.

Besonders bevorzugte Carboxylat-Ionen mit den zuvor definierten Resten sind Anionen der Carbonsäuren, wie zum Beispiel Fettsäuren, der Dicarbonsäuren, wie zum Beispiel Sebacin- und Bernsteinsäure, Tetracarbonsäuren wie zum Beispiel Ethylendiamintetraessigsäure.

Weitere bevorzugte Anionen $A^-$ des Extraktionsmittels der Formel I stellen die folgenden Anionen dar:

- die Carbonat-Ionen der allgemeinen Struktur

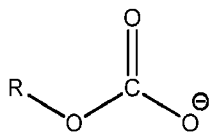

wobei R ausgewählt ist aus der Gruppe der Gruppe G.

Besonders bevorzugte Carbonat-Ionen mit den zuvor definierten Resten sind Anionen der Kohlensäure, wie zum Beispiel Methylcarbonat, Ethylcarbonat und Hydrogencarbonat.

Weitere bevorzugte Anionen $A^-$ des Extraktionsmittels der Formel I stellen die folgenden Anionen dar:

- die Borat-Ionen der allgemeinen Struktur

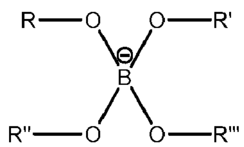

wobei R, R', R" und R'" unabhängig voneinander ausgewählt sind aus der Gruppe G, oder R und R" gemeinsam mit der O-B-O-Einheit, an die sie gebunden sind, einen gegebenenfalls aromatischen Heterozyklus ausbilden, der bevorzugt fünf- bis acht-gliedrig ist, der neben Kohlenstoff die O-B-O-Einheit und gegebenenfalls weitere Heteroatome enthält, der gegebenenfalls eine oder mehrere Doppel- und/oder Dreifachbindungen enthält, und der substituiert oder unsubstituiert ist, wobei mögliche Substituenten bevorzugt ausgewählt sind aus der Gruppe bestehend aus Alkyl, bevorzugt $C_1$-$C_4$-Alkyl, Aryl, bevorzugt $C_5$- und $C_6$-Aryl, Hydroxy, Carboxyl, Halogen, bevorzugt Fluor und Chlor, Alkoxy, bevorzugt $C_1$-$C_4$-Alkoxy, und Cyano.

Weitere bevorzugte Borat-Ionen sind Tetra(p-tolyl)borate und Tetrakis(4-biphenylyl)borate.

Bevorzugt ist das Extraktionsmittel eine Verbindung der Formel Ia oder eine Mischung aus mehreren Verbindungen der Formel Ia:

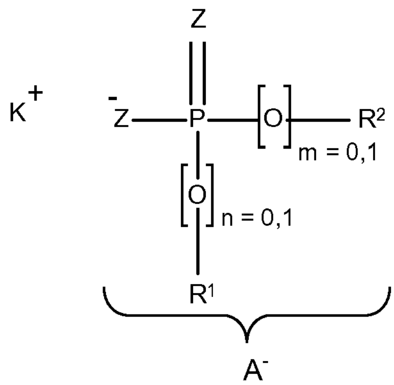

Formel Ia

wobei

K+ ausgewählt ist aus der Gruppe bestehend aus

- •Ammonium-Ion, bevorzugt Pyrrolidinium-Ion, Tetraethylammonium-Ion, (2-Hydroxyethyl)trimethylammonium-Ion (Cholin), Tetrapropylammonium-Ion, Tetramethylammonium-Ion, Tetrabutylammonium-Ion und Ammonium-Ion der Formel $[NH_4]^+$, besonders bevorzugt Ammonium-Ion der Formel $[NH_4]^+$,
- •Iminium-Ion, bevorzugt Pyridinium-Ion und Imidazolium-Ion,
- •Phosphonium-Ion, bevorzugt quartäres Phosphonium-Ion, besonders bevorzugt Tetramethylphosphonium-Ion, Tetraethylphosphonium-Ion, Tetrapropyl-phosphonium-Ion und Tetrabutylphosphonium-Ion, und
- •Sulfonium-Ion,

Z O oder S ist, bevorzugt O, und

$R^1$, $R^2$ unabhängig voneinander ausgewählt sind aus der Gruppe bestehend aus Wasserstoff, $C_1$-$C_{20}$-Alkyl, das substituiert oder unsubstituiert ist und gegebenenfalls Polyalkylenglykol-, Polyurethan- und/oder Polyestereinheiten enthält, $C_2$-$C_{20}$-Alkenyl, das substituiert oder unsubstituiert ist und eine oder mehrere Doppelbindungen enthält, $C_2$-$C_{20}$-Alkinyl, das substituiert oder unsubstituiert ist und eine oder mehrere Dreifachbindungen enthält, $C_3$-$C_{20}$-Aryl, das substituiert oder unsubstituiert ist, Heteroaryl, das substituiert oder unsubstituiert ist, fünf- bis zwanzig-gliedrig ist und ein oder mehrere Heteroatome enthält, $C_3$-$C_{14}$-Cycloalkyl, das substituiert oder unsubstituiert ist, Heterocycloalkyl, das substituiert oder unsubstituiert ist, drei- bis acht-gliedrig ist und ein oder mehrere Heteroatome enthält, und Polyalkylenglykolyl, wobei $R^1$ und $R^2$ auch gemeinsam mit der O-P-O-Einheit oder P-O-Einheit oder dem P-Atom, an die/das sie gebunden sind, einen gegebenenfalls aromatischen Heterozyklus ausbilden können, der bevorzugt fünf- bis acht-gliedrig ist, der neben Kohlenstoff die O-P-O-Einheit oder P-O-Einheit oder das P-Atom und gegebenenfalls weitere Heteroatome enthält, der gegebenenfalls eine oder mehrere Doppel- und/oder Dreifachbindungen enthält, und der substituiert oder unsubstituiert ist.

Die Alkyl-, Alkenyl- und Alkinyl-Reste können linear oder verzweigt vorliegen.

Geeignete Substituenten für $R^1$ und $R^2$ sowie für den zuvor beschriebenen, aus $R^1$ und $R^2$ gebildeten, Heterozyklus sind bevorzugt ausgewählt aus der Gruppe bestehend aus $C_1$-$C_4$-Alkyl, Aryl, bevorzugt $C_5$- und $C_6$-Aryl, Hydroxy, Carboxyl, Halogen, bevorzugt Fluor und Chlor, Alkoxy, bevorzugt $C_1$-$C_4$-Alkoxy, und Cyano.

Das in dem erfindungsgemäßen Verfahren eingesetzte Extraktionsmittel der Formel I, bevorzugt der Formel Ia, ist bevorzugt eine ionische Flüssigkeit.

Unter "ionische Flüssigkeit" wird im Rahmen dieser Erfindung eine Verbindung der Formel I, bevorzugt der Formel Ia, verstanden, die einen Schmelzpunkt von weniger als 100 °C aufweist.

Kationen $K^+$ der Formel I, bevorzugt der Formel Ia, sind bevorzugt ausgewählt aus der Gruppe bestehend aus Ammonium-Ion und Iminium-Ion, bevorzugt bestehend aus 1,3-Dimethylimidazolium-Ion, 1-Ethyl-3-methylimidazolium-

Ion und dem Ammonium-Ion der Formel $[NH_4]^+$, besonders bevorzugt bestehend aus dem Ammonium-Ion der Formel $[NH_4]^+$.

Anionen $A^-$ der Formel I, bevorzugt der Formel Ia, sind bevorzugt ausgewählt aus der Gruppe bestehend aus Dibutylphosphat, Bis(2-ethylhexyl)phosphat und Bis(2,4,4-trimethylpentyl)phosphinat, bevorzugt bestehend aus Bis(2,4,4-trimethylpentyl)-phosphinat.

Bevorzugt ist das in dem erfindungsgemäßen Verfahren eingesetzte Extraktionsmittel eine Verbindung der Formel Ia oder eine Mischung aus mehreren Verbindungen der Formel Ia, wobei

- n, m = 0 und Z = O

sind.

Bevorzugt weist das in dem erfindungsgemäßen Verfahren eingesetzte Extraktionsmittel der Formel I, besonders bevorzugt der Formel Ia, eine Wasserlöslichkeit von wenigstens 33 g/ 1 L Wasser, besonders bevorzugt von wenigstens 100 g/ 1 L Wasser, ganz besonders bevorzugt von wenigstens 900 g/ 1 L Wasser bei 20 °C auf.

Bevorzugt bildet das in dem erfindungsgemäßen Verfahren eingesetzte Extraktionsmittel der Formel I, besonders bevorzugt der Formel Ia, mit Cr(III) eine Verbindung, die eine Wasserlöslichkeit von weniger als 10 g/ 1 L Wasser, besonders bevorzugt von weniger als 5 g/ 1 L Wasser, ganz besonders von weniger als 0,1 g/ 1 L Wasser bei 20 °C aufweist.

Bevorzugt bildet das in dem erfindungsgemäßen Verfahren eingesetzte Extraktionsmittel der Formel I, besonders bevorzugt der Formel Ia, mit Cr(III) eine Verbindung, die einen Zersetzungsgrad von weniger als 10 %, bevorzugt von weniger als 5 %, besonders bevorzugt von weniger als 1 % unter den Bedingungen in Schritt b) nach Schritt b) aufweist, die unten näher beschrieben sind.

Unter "Zersetzungsgrad" wird im Rahmen der vorliegenden Erfindung die positive Differenz aus dem Chrom-Gehalt der organischen Phase erhalten nach Schritt a) und dem Chrom-Gehalt der organischen Phase erhalten nach Schritt b) verstanden. Unter "positive Differenz" wird verstanden, dass der Chrom-Gehalt der organischen Phase erhalten nach Schritt a) größer ist als der Chrom-Gehalt der organischen Phase erhalten nach Schritt b), sodass die Differenz einen positiven Wert ergibt. Eine negative Differenz würde bedeuten, dass der Chrom-Gehalt der organischen Phase erhalten nach Schritt a) geringer ist als der Chrom-Gehalt der organischen Phase erhalten nach Schritt b). Eine negative Differenz würde demnach eine Zunahme des Chrom-Gehaltes der organischen Phase nach Schritt b) gegenüber dem Chrom-Gehalt der organischen Phase nach Schritt a) bedeuten und demnach keine Zersetzung der Verbindung aus Extraktionsmittel und Cr(III).

Das in dem erfindungsgemäßen Verfahren eingesetzte Extraktionsmittel der Formel I, bevorzugt der Formel Ia, ist bevorzugt ausgewählt aus der Gruppe bestehend aus Ammonium-dibutylphosphat, Ammonium-bis(2-ethylhexyl)phosphat und Ammonium-bis(2,4,4-trimethylpentyl)-phosphinat, bevorzugt bestehend aus Ammonium-bis(2,4,4-trimethylpentyl)-phosphinat.

Bevorzugt wird das in dem erfindungsgemäßen Verfahren eingesetzte Extraktionsmittel der Formel I, besonders bevorzugt der Formel Ia, in einer wässrigen Mischung eingesetzt, die bevorzugt wenigstens 50 Gew.-%, besonders bevorzugt wenigstens 70 Gew.-%, ganz besonders bevorzugt wenigstens 90 Gew.-% des Extraktionsmittels der Formel I, besonders bevorzugt der Formel Ia, und bevorzugt wenigstens 3 Gew.-% Wasser, besonders bevorzugt wenigstens 5 Gew.-% Wasser enthält. Die wässrige Mischung kann bevorzugt bis zu 47 Gew.-%, besonders bevorzugt bis zu 25 Gew.-%, ganz besonders bevorzugt bis zu 5 Gew.-% weiterer Zusatzstoffe wie beispielsweise organische Lösungsmittel, beispielsweise Hexan, Cyclohexan, Toluol oder Diethylether, enthalten.

In einer bevorzugten Ausführungsform der vorliegenden Erfindung wird eine wässrige Lösung des Extraktionsmittels der Formel I, besonders bevorzugt der Formel Ia, mit einer Konzentration des Extraktionsmittels von 1 bis 3 mol/L, besonders bevorzugt von 1,5 bis 2,5 mol/L, in dem erfindungsgemäßen Verfahren eingesetzt. Besonders bevorzugt wird in dem erfindungsgemäßen Verfahren eine wässrige Lösung des Extraktionsmittels der Formel Ia eingesetzt.

Das Extraktionsmittel der Formel I, besonders bevorzugt der Formel Ia, wird bevorzugt in einem Verhältnis von größer als 2 : 1, besonders bevorzugt größer als 5 : 1, ganz besonders bevorzugt größer als 8 : 1, bezogen auf ein Moläquivalent Chrom(III) in dem Chrom-haltigen, kollagenhaltigen Material, eingesetzt.

## Chrom-haltiges, kollagenhaltiges Material

In dem erfindungsgemäßen Verfahren können grundsätzlich alle Chrom-haltigen, kollagenhaltigen Materialien eingesetzt werden. Bevorzugt wird als Chrom-haltiges, kollagenhaltiges Material Chrom-haltiges Leder, besonders bevorzugt Chrom-haltige Lederfalzspäne, eingesetzt.

Unter "Chrom-haltiges Leder" werden im Rahmen dieser Anmeldung mittels eines Chromgerbstoffs gegerbte Häute und Felle verstanden, wobei die Schrumpfungstemperatur des gegerbten Hautmaterials so hoch ist, dass mindestens eine hydrothermale Stabilisierung des Hautmaterials erreicht wurde, die eine nachfolgende Verarbeitung durch

mechanische Operationen zulässt und eine Schädigung durch die mechanische und thermische Belastung, beispielsweise Reibungswärme beim Falzen, vermeidet.

Der Chrom-Gehalt in dem eingesetzten Chrom-haltigen, kollagenhaltigen Material, bevorzugt dem Chrom-haltigen Leder, ist beliebig. Bevorzugt beträgt der Chrom-Gehalt in dem Chrom-haltigen, kollagenhaltigen Material, bevorzugt Chrom-haltigen Leder, weniger als 10 Gew.-%, besonders bevorzugt weniger als 7 Gew.-%, ganz besonders bevorzugt weniger als 5 Gew.-%, bezogen auf die Gesamtmasse des Chrom-haltigen, kollagenhaltigen Materials, bevorzugt des Chrom-haltigen Leders.

<u>Verfahrensschritte</u>

Bevorzugt enthält das erfindungsgemäße Verfahren die Schritte

a) Umsetzung des Chrom-haltigen, kollagenhaltigen Materials, bevorzugt Chrom-haltigen Leders, bei einem pH-Wert von 3 bis 6, bevorzugt 3,5 bis 5,5, mit dem Extraktionsmittel der Formel I, bevorzugt der Formel Ia,

b) Zufügen von Schwefelsäure zu dem Reaktionsgemisch erhalten nach Schritt a) bei einer Temperatur von weniger als 30 °C, bevorzugt von weniger als 25 °C,

c) Trennung der organischen Phase und der wässrigen Phase erhalten nach Schritt b), und gegebenenfalls

d) Isolierung des kollagenhaltigen Materials aus der wässrigen Phase erhalten nach Schritt c).

Schritt a)

Die Umsetzung in Schritt a) erfolgt bevorzugt durch Zusammenfügen der Komponenten aus Schritt a) und anschließendem Vermengen der Komponenten aus Schritt a).

Bezüglich des in Schritt a) eingesetzten Extraktionsmittels der Formel I und des Chrom-haltigen, kollagenhaltigen Materials gelten alle vorherigen Beschreibungen und Vorzugsbereiche für das Extraktionsmittel und das Chrom-haltige, kollagenhaltige Material für Schritt a) analog.

Bevorzugt werden wenigstens 90 %, besonders bevorzugt wenigstens 95 %, ganz besonders bevorzugt wenigstens 98 % des Extraktionsmittels der Formel I, bevorzugt der Formel Ia, in Schritt a) des erfindungsgemäßen Verfahrens eingesetzt, bezogen auf die Gesamtmasse des in dem erfindungsgemäßen Verfahren eingesetzten Extraktionsmittels.

Bevorzugt werden wenigstens 90 %, besonders bevorzugt wenigstens 95 %, ganz besonders bevorzugt wenigstens 98 % des Chrom-haltigen, kollagenhaltigen Materials, bevorzugt Chrom-haltigen Leders, in Schritt a) des erfindungsgemäßen Verfahrens eingesetzt, bezogen auf die Gesamtmasse des in dem erfindungsgemäßen Verfahren eingesetzten Chrom-haltigen, kollagenhaltigen Materials, bevorzugt Chrom-haltigen Leders.

Für die Umsetzung des Chrom-haltigen, kollagenhaltigen Materials, bevorzugt Chrom-haltigen Leders, bei einem pH-Wert von 3 bis 6, bevorzugt 3,5 bis 5,5, mit dem Extraktionsmittel der Formel I, bevorzugt der Formel Ia, besonders bevorzugt mit einer wässrigen Lösung des Extraktionsmittels der Formel I, ganz besonders bevorzugt der Formel Ia, sind dem Fachmann gängige Methoden zum Vermengen von Feststoffen und Flüssigkeiten bekannt. Bevorzugt erfolgt das Vermengen durch Rühren der Komponenten aus Schritt a).

Der pH-Wert in Schritt a) des erfindungsgemäßen Verfahrens wird bevorzugt mit einer Säure eingestellt, besonders bevorzugt mit einer Säure mit einem $pK_a$-Wert von größer als 2,0. Ganz besonders bevorzugt wird der pH-Wert in Schritt a) mit Essigsäure eingestellt.

Die Einstellung des pH-Wertes in Schritt a) erfolgt bevorzugt nach dem Zusammenfügen der Komponenten aus Schritt a).

Bevorzugt erfolgt die Umsetzung in Schritt a) bei einer Temperatur von 45 bis 90 °C, bevorzugt bei einer Temperatur von 65 bis 85 °C.

Die Dauer der Umsetzung in Schritt a) ist abhängig von mehreren Faktoren, wie beispielsweise der Temperatur bei der Umsetzung, dem Überschuss des Extraktionsmittels, der Methode des Vermengens sowie der Größe der Vorrichtung, in der die Umsetzung stattfindet. Der Fachmann kann die geeignete Dauer der Umsetzung ermitteln. Bevorzugt beträgt die Umsetzung in Schritt a) wenigstens 10 Minuten, besonders bevorzugt wenigstens 20 Minuten, ganz besonders bevorzugt wenigstens 25 Minuten.

Unter "Dauer der Umsetzung" wird im Rahmen dieser Erfindung die Summe aus der Dauer des Zusammenfügens sowie der Dauer des Vermengens der Komponenten aus Schritt a) verstanden. Die Dauer des Zusammenfügens der Komponenten aus Schritt a) beträgt bevorzugt weniger als 10 %, bevorzugt weniger als 5 % von der Dauer der Umsetzung.

Das Zusammenfügen der Komponenten aus Schritt a) kann in einer beliebigen Reihenfolge erfolgen.

Das Chrom-haltige, kollagenhaltige Material, bevorzugt Chrom-haltige Leder, wird bevorzugt mit Wasser, bevorzugt mit destilliertem Wasser, bevorzugt mit einer 10 bis 30fachen Masse bezogen auf die Masse des Chrom-haltigen, kollagenhaltigen Materials, bevorzugt Chrom-haltigen Leders, vermengt.

Bevorzugt wird das mit Wasser vermengte, Chrom-haltige, kollagenhaltige Material, bevorzugt Chrom-haltige Leder, im Anschluss mit dem Extraktionsmittel der Formel I, bevorzugt der Formel Ia, versetzt.

Sofern die Umsetzung in Schritt a) bei einer Temperatur von 45 bis 90 °C, bevorzugt bei einer Temperatur von 65 bis 85 °C erfolgt, ist es unwesentlich, ob das Erhitzen bereits bei dem Zusammenfügen, oder erst bei dem Vermengen der Komponenten aus Schritt a) erfolgt.

Schritt b)

Das Zufügen von Schwefelsäure zu dem Reaktionsgemisch erhalten nach Schritt a) erfolgt in Schritt b) bei einer Temperatur von weniger als 30 °C, bevorzugt von weniger als 25 °C.

Die in Schritt b) zugefügte Schwefelsäure kann in beliebiger Konzentration eingesetzt werden. Bevorzugt wird eine 60 bis 85%-ige Schwefelsäure in Schritt b) eingesetzt.

In Schritt b) wird die Schwefelsäure bevorzugt in einem Verhältnis von 5 : 1, bevorzugt 3 : 1, besonders bevorzugt 2 : 1 (bezogen auf 1 Moläquivalent überschüssiges Extraktionsmittel, wobei unter "1 Moläquivalent überschüssiges Extraktionsmittel" die Differenz aus den Moläquivalenten an eingesetztem Extraktionsmittel, bezogen auf 1 Moläquivalent Chrom(III) in dem Chrom-haltigen, kollagenhaltigen Material, bevorzugt Chrom-haltigen Leder, und 3 Moläquivalenten verstanden wird) eingesetzt.

Nach dem Zufügen der Schwefelsäure in Schritt b) wird das Reaktionsgemisch im Anschluss bevorzugt vermengt.

Für das Vermengen sind dem Fachmann gängige Methoden zum Vermengen von Feststoffen und Flüssigkeiten bekannt. Bevorzugt erfolgt das Vermengen durch Rühren der Komponenten aus Schritt b).

Die Dauer des Vermengens des Reaktionsgemisches erhalten in Schritt b) ist abhängig von mehreren Faktoren, wie beispielsweise der Konzentration und der Menge der Schwefelsäure eingesetzt in Schritt b), der Methode des Vermengens sowie der Größe der Vorrichtung, in der das Vermengen stattfindet. Der Fachmann kann die geeignete Dauer der Umsetzung ermitteln.

Bevorzugt erfolgt das Vermengen des Reaktionsgemisches erhalten in Schritt b) für eine Dauer von wenigstens 30 Minuten, besonders bevorzugt wenigstens 40 Minuten, ganz besonders bevorzugt wenigstens 50 Minuten.

In einer bevorzugten Ausführungsform erfolgte die Umsetzung in Schritt a) bei einer Temperatur von 45 bis 90 °C, bevorzugt bei einer Temperatur von 65 bis 85 °C. In diesem Fall muss das nach Schritt a) erhaltene Reaktionsgemisch zunächst abgekühlt werden, bevor in Schritt b) die Schwefelsäure zugefügt wird.

Das Abkühlen des nach Schritt a) erhaltenen Reaktionsgemisches auf eine Temperatur von weniger als 30 °C, bevorzugt von weniger als 25 °C, erfolgt auf eine dem Fachmann bekannte Weise. Bevorzugt erfolgt das Abkühlen auf eine Temperatur von weniger als 30 °C, bevorzugt von weniger als 25 °C, mittels einer Eiskühlung.

Der besondere Effekt, der aus dem Einsatz der Schwefelsäure in Schritt b) resultiert, liegt darin, dass unerwünschte, wasserlösliche Leaching-Verbindungen (Komplexe aus Cr(III), dem Extraktionsmittel der Formel I, bevorzugt der Formel Ia, und dem Chrom-haltigen, kollagenhaltigen Material, bevorzugt Chrom-haltigen Leder) zerstört werden. Dadurch wird das Chrom-haltige, kollagenhaltige Material, bevorzugt Chrom-haltige Leder, entchromt und die Reaktionsprodukte aus dem Zerfall der Leaching-Verbindungen sammeln sich in der organischen Phase.

Schritt c)

Das zweiphasige Reaktionsgemisch, erhalten nach Schritt b), enthält eine wässrige und eine organische Phase.

In Schritt c) werden die organische und die wässrige Phase, erhalten nach Schritt b), getrennt.

Die Trennung der Phasen in Schritt c) kann mittels dem Fachmann bekannter Techniken zur Phasentrennung durchgeführt werden, beispielsweise mittels Dekantieren, Extrahieren und/oder Pipettieren. Zusätzlich kann auch ein Schritt der Filtration in die zuvor genannten Techniken integriert werden.

Bevorzugt erfolgt die Trennung in Schritt c) durch Dekantieren der organischen Phase von der wässrigen Phase.

Sofern erforderlich, kann der Trennung in Schritt c) die Extraktion der wässrigen Phase erhalten nach Schritt c) unter Verwendung eines oder mehrerer organischer Lösungsmittel angeschlossen werden. Geeignete organische Lösungsmittel weisen eine Wasserlöslichkeit von bevorzugt weniger als 1 g/L, bevorzugt von weniger als 0,6 g/L, bei 20 °C auf. Beispiele für solche organischen Lösungsmittel sind Cyclohexan, Hexan und Toluol.

Bevorzugt erfolgt die Extraktion unter Verwendung von weniger als der 2fachen Menge, bezogen auf das Volumen der wässrigen Phase erhalten nach Schritt c), besonders bevorzugt mit weniger als der 1fachen Menge, ganz besonders bevorzugt mit weniger als der 0,5fachen Menge, eines oder mehrerer organischer Lösungsmittel.

Die wässrige Phase, in der sich das kollagenhaltige Material befindet, kann erneut in Schritt a) eingesetzt.

**Schritt d)**

Dem Schritt c) kann sich gegebenenfalls der Schritt d) anschließen. Die Isolierung des kollagenhaltigen Materials aus der wässrigen Phase erhalten nach Schritt c) erfolgt in Schritt d) auf eine dem Fachmann bekannte Weise.
Bevorzugt erfolgt die Isolierung des kollagenhaltigen Materials aus der wässrigen Phase erhalten nach Schritt c) durch Dekantieren oder Filtrieren.
Dem sich gegebenenfalls dem Schritt c) anschließende Schritt d) der Isolierung des kollagenhaltigen Materials aus der wässrigen Phase erhalten nach Schritt c) können sich weitere Reinigungsschritte des kollagenhaltigen Materials anschließen.
Bevorzugt erfolgt die Reinigung des kollagenhaltigen Materials isoliert aus der wässrigen Phase erhalten nach Schritt c) durch Waschen mit Wasser, bevorzugt mit destilliertem Wasser.
Bevorzugt erfolgt das Waschen unter Verwendung von weniger als der 20fachen Menge, bezogen auf das Volumen des kollagenhaltigen Materials, besonders bevorzugt von weniger als der 10fachen Menge, ganz besonders bevorzugt von weniger als der 5fachen Menge, Wasser, besonders bevorzugt von destilliertem Wasser.
Sofern erforderlich, ist es möglich, zur weiteren Reinigung des kollagenhaltigen Materials isoliert aus der wässrigen Phase erhalten nach Schritt c) eines oder mehrere organische Lösungsmittel wie beispielsweise Cyclohexan oder Diethylether zu verwenden.
Bevorzugt erfolgt die Reinigung des kollagenhaltigen Materials isoliert aus der wässrigen Phase erhalten nach Schritt c) unter Verwendung von weniger als der 5fachen Menge bezogen auf das Volumen des kollagenhaltigen Materials, besonders bevorzugt von weniger als der 3fachen Menge, ganz besonders bevorzugt von weniger als der 2fachen Menge eines oder mehrerer organischer Lösungsmittel.

**Schritte e) bis i)**

In einer bevorzugten Ausführungsform des erfindungsgemäßen Verfahrens schließen sich dem Schritt c) die weiteren Schritte

e) Umsetzung der organischen Phase erhalten nach Schritt c) mit Schwefelsäure, bevorzugt bei einer Temperatur von 60 bis 90 °C, besonders bevorzugt bei einer Temperatur von 65 bis 85 °C,

f) Trennung der organischen Phase, enthaltend die Präkursor-Säure des Extraktionsmittels der Formel I, bevorzugt der Formel Ia, und der wässrigen Phase, enthaltend Chrom(III)-sulfat, erhalten nach Schritt e),

g) Isolierung der Präkursor-Säure des Extraktionsmittels der Formel I, bevorzugt der Formel Ia, aus der organischen Phase erhalten nach Schritt f),

h) Regeneration des Extraktionsmittels der Formel I, bevorzugt der Formel Ia, durch Umsetzung der nach Schritt g) erhaltenen Präkursor-Säure des Extraktionsmittels der Formel I, bevorzugt der Formel Ia, mit entsprechenden Komponenten, die in der Lage sind, bei Reaktion mit der Präkursor-Säure des Extraktionsmittels der Formel I, bevorzugt der Formel Ia, Kationen $K^+$ der Formel I, bevorzugt der Formel Ia, bereitzustellen, und

i) Wiedereinsetzung des nach Schritt h) erhaltenen Extraktionsmittels der Formel I, bevorzugt der Formel Ia, in Schritt a).

Unter "Präkursor-Säure des Extraktionsmittels der Formel I" wird ein protoniertes Anion $A^-$ der Formel I verstanden, wobei das Proton kovalent mit dem Anion $A^-$ der Formel I verbunden ist. Analoges gilt für die bevorzugte Präkursor-Säure des Extraktionsmittels der Formel Ia.

**Schritt e)**

Die in Schritt e) eingesetzte Schwefelsäure wird bevorzugt in einer Konzentration von 20 bis 80 %, besonders bevorzugt von 45 bis 80 %, ganz besonders bevorzugt von 70 bis 80 % eingesetzt.
In Schritt e) wird die Schwefelsäure bevorzugt in einem Verhältnis von 2 : 1 bis 12 : 1, bevorzugt von 8 : 1 bis 10 : 1 (bezogen auf 1 Moläquivalent Chrom(III) in der organischen Phase erhalten nach Schritt c)) eingesetzt.
Bevorzugt wird die Schwefelsäure in einem 0,3 bis 1,5-fachen Volumen, bezogen auf das Volumen der organischen Phase erhalten nach Schritt c), in Schritt e) eingesetzt.

Die Dauer Umsetzung in Schritt e) ist abhängig von mehreren Faktoren, wie beispielsweise der Konzentration und der Menge der Schwefelsäure eingesetzt in Schritt e), der Temperatur, der Methode des Vermengens sowie der Größe der Vorrichtung, in der die Umsetzung stattfindet. Der Fachmann kann die geeignete Dauer der Umsetzung ermitteln.

Die Dauer der Umsetzung in Schritt e) beträgt bevorzugt wenigstens 30 Minuten, besonders bevorzugt wenigstens 40 Minuten, ganz besonders bevorzugt wenigstens 50 Minuten.

Unter "Dauer der Umsetzung" wird im Rahmen dieser Erfindung die Summe aus der Dauer des Zusammenfügens sowie der Dauer des Vermengens der Komponenten aus

Schritt e) verstanden. Die Dauer des Zusammenfügens der Komponenten aus Schritt e) beträgt bevorzugt weniger als 10%, bevorzugt weniger als 5% von der Dauer der Umsetzung.

Für die Umsetzung der organischen Phase, erhalten nach Schritt c), mit Schwefelsäure sind dem Fachmann gängige Methoden zum Vermengen von Flüssigkeiten bekannt, beispielsweise Rühren, Schütteln und/oder Schwenken.

Bevorzugt erfolgt das Vermengen der organischen Phase erhalten nach Schritt c) und der Schwefelsäure in Schritt e) durch Rühren.

Das zweiphasige Reaktionsgemisch, erhalten nach Schritt e), enthält eine wässrige und eine organische Phase.

**Schritt f)**

In Schritt f) werden die organische und die wässrige Phase des Reaktionsgemisches erhalten nach Schritt e) getrennt.

Die Trennung der Phasen in Schritt f) kann mittels gängiger Techniken zur Phasentrennung durchgeführt werden, beispielsweise mittels Dekantieren, Extrahieren und/oder Pipettieren.

Bevorzugt erfolgt die Trennung in Schritt f) durch Dekantieren der organischen Phase von der wässrigen Phase.

Sofern erforderlich, kann der Trennung in Schritt f) die Extraktion der wässrigen Phase erhalten nach Schritt f) unter Verwendung eines oder mehrerer organischer Lösungsmittel angeschlossen werden. Geeignete organische Lösungsmittel weisen eine Wasserlöslichkeit von bevorzugt weniger als 1 g/L, bevorzugt von weniger als 0,6 g/L, bei 20 °C auf. Beispiele für solche organischen Lösungsmittel sind Cyclohexan, Hexan und Toluol.

Bevorzugt erfolgt die Extraktion unter Verwendung von weniger als der 2fachen Menge bezogen auf das Volumen der wässrigen Phase erhalten nach Schritt f), besonders bevorzugt von weniger als der 1fachen Menge, ganz besonders bevorzugt von weniger als der 0,5fachen Menge eines oder mehrerer organischer Lösungsmittel.

In der wässrigen Phase erhalten nach Schritt f) verbleibt das Chrom(III) als Chrom(III)-sulfat. Dieses Chrom(III)-sulfat kann in gängigen zur Gerbung von Leder verwendeten Gerbstoffen weiter verwendet werden.

Auf diese Weise kann das Chrom(III), das in Schritt a) des erfindungsgemäßen Verfahrens durch das Chrom-haltige, kollagenhaltige Material, bevorzugt Chrom-haltige Leder, in das erfindungsgemäße Verfahren eingebracht wurde, wiedergewonnen.

**Schritt g)**

Bevorzugt wird die organische Phase erhalten nach Schritt f) zur Isolierung der Präkursor-Säure des Extraktionsmittels der Formel I, bevorzugt der Formel Ia, mit Wasser, besonders bevorzugt mit destilliertem Wasser, gewaschen.

Bevorzugt erfolgt das Waschen unter Verwendung von weniger als der 5fachen Menge bezogen auf das Volumen der organischen Phase erhalten nach Schritt f), besonders bevorzugt von weniger als der 3fachen Menge, ganz besonders bevorzugt von weniger als der 2fachen Menge Wasser.

Sofern in Schritt f) organische Lösungsmittel verwendet wurden, können diese in Schritt g) durch geeignete Techniken entfernt werden, bevorzugt durch Entfernung der organischen Lösungsmittel unter vermindertem Druck. Alternativ können die organischen Lösungsmittel auch verbleiben und als Gemisch mit der Präkursor-Säure des Extraktionsmittels der Formel I, bevorzugt der Formel Ia, in Schritt h) eingesetzt werden.

**Schritt h)**

Um das Extraktionsmittel der Formel I, bevorzugt der Formel Ia, aus der Präkursor-Säure des Extraktionsmittels der Formel I, bevorzugt der Formel Ia, erhalten nach Schritt g), zu regenerieren, wird diese mit entsprechenden Komponenten, die in der Lage sind, bei Reaktion mit der Präkursor-Säure des Extraktionsmittels der Formel I, bevorzugt der Formel Ia, Kationen $K^+$ der Formel I, bevorzugt der Formel Ia, bereitzustellen, umgesetzt. Solche Komponenten sind beispielsweise Komponenten der Formel $K^+ OH^-$, wobei $K^+$ ein Kation der Formel I, bevorzugt der Formel Ia, darstellt.

Das auf diese Weise erhaltene Extraktionsmittel der Formel I, bevorzugt der Formel Ia, kann gegebenenfalls unter vermindertem Druck getrocknet werden.

Bevorzugt wird eine solche Trocknung bei einer Temperatur von 35 bis 80 °C, bevorzugt von 45 bis 65 °C

durchgeführt.

Bevorzugt wird die Präkursor-Säure des Extraktionsmittels der Formel I, bevorzugt der Formel Ia, erhalten nach Schritt g), mit Ammoniak, bevorzugt mit einer wässrigen Ammoniak-Lösung umgesetzt, um das Extraktionsmittel der Formel I, bevorzugt der Formel Ia, bevorzugt in Form einer wässrigen Mischung, mit Ammonium als Kation $K^+$ zu regenerieren.

Bevorzugt erfolgt die Regeneration in Schritt h) unter Umsetzung mit Ammoniak, bevorzugt mit einer wässrigen Ammoniak-Lösung, bei einer Temperatur von weniger als 10 °C, besonders bevorzugt bei einer Temperatur von weniger als 5 °C.

Bevorzugte Präkursor-Säuren des Extraktionsmittels der Formel I, bevorzugt der Formel Ia, sind Dibutylphosphorsäure, Bis(2-ethylhexyl)phosphorsäure und Bis(2,4,4-trimethylpentyl)-phosphinsäure, besonders bevorzugt Bis(2,4,4-trimethylpentyl)-phosphinsäure, die jeweils mit Ammoniak zu dem jeweiligen Extraktionsmittel Ammonium-dibutylphosphat, Ammonium-bis(2-ethylhexyl)phosphat und Ammonium-bis(2,4,4-trimethylpentyl)-phosphinat, bevorzugt Ammonium-bis(2,4,4-trimethylpentyl)-phosphinat, der Formel I, bevorzugt der Formel Ia, umgesetzt werden.

Bevorzugt ist die Präkursor-Säure des Extraktionsmittels der Formel I, bevorzugt der Formel Ia, Bis(2,4,4-trimethylpentyl)-phosphinsäure, die mit Ammoniak zu dem Extraktionsmittel Ammonium-bis(2,4,4-trimethylpentyl)-phosphinat der Formel I, bevorzugt der Formel Ia, umgesetzt wird.

Sofern in Schritt f) organische Lösungsmittel verwendet wurden, diese in Schritt g) jedoch nicht entfernt wurden, werden diese bevorzugt in Schritt f) durch geeignete Techniken entfernt, bevorzugt durch Dekantieren.

**Schritt i)**

Bevorzugt wird das Extraktionsmittel der Formel I, bevorzugt der Formel Ia, erhalten nach Schritt h), in Schritt a) des erfindungsgemäßen Verfahrens wieder eingesetzt.

Bevorzugt wird das Extraktionsmittel der Formel I, bevorzugt der Formel Ia, Ammonium-bis(2,4,4-trimethylpentyl)-phosphinat, erhalten nach Schritt h), in Schritt a) des erfindungsgemäßen Verfahrens wieder eingesetzt.

Besonders bevorzugt wird eine wässrige Mischung des Extraktionsmittels der Formel I, ganz besonders bevorzugt der Formel Ia, ganz ganz besonders bevorzugt eine wässrige Mischung von Ammonium-bis(2,4,4-trimethylpentyl)-phosphinat, erhalten nach Schritt h), in Schritt a) des erfindungsgemäßen Verfahrens wieder eingesetzt

Alle Ausführungen bezüglich des Extraktionsmittels der Formel I in den Schritten a) bis i) gelten insbesondere auch für das Extraktionsmittel der Formel Ia.

**Kollagenhaltiges Material**

Das kollagenhaltige Material erhalten nach Schritt d) des erfindungsgemäßen Verfahrens weist bevorzugt eine intakte Kollagenstruktur auf.

Bevorzugt enthält das kollagenhaltige Material erhalten nach Schritt d) weniger als 0,0003 Gew.-% Chrom(VI), bezogen auf die Masse des kollagenhaltigen Materials, bestimmt nach DIN EN ISO 17075.

Bevorzugt enthält das kollagenhaltige Material erhalten nach Schritt d) weniger als 1,5 Gew.-%, besonders bevorzugt weniger als 1 Gew.-%, ganz besonders bevorzugt weniger als 0,6 Gew.-% Chrom(III), bezogen auf die Masse des kollagenhaltigen Materials.

Das kollagenhaltige Material erhalten nach Schritt d) des erfindungsgemäßen Verfahrens weist bevorzugt eine Schrumpfungstemperatur von weniger als 75 °C, bevorzugt von weniger als 70 °C auf, bevorzugt ermittelt mittels DSC-Messungen gemäß weiter unten beschriebener Methode M4.

**Verwendung**

Die Erfindung betrifft weiterhin die Verwendung des kollagenhaltigen Materials erhalten nach Schritt d) des erfindungsgemäßen Verfahrens im Bereich der Kosmetik, der Medizin, der Nahrungsmittel und/oder zur Herstellung von Hilfsmitteln, bevorzugt von Lederhilfsmitteln, besonders bevorzugt von Lederhilfsmitteln zur Nachgerbung von Leder.

**Beispiele**

Anhand der nachfolgenden Beispiele wird die Erfindung näher erläutert, ohne dass dadurch eine Einschränkung der Erfindung bewirkt werden soll.

**1. Vorbereitungen für die allgemeinen Durchführungen und Analysemethoden**

Die in den folgenden Beispielen eingesetzten Lederfalzspäne sind Falzspäne von Chromgegerbter Rindshaut.

Die Lederfalzspäne wiesen einen Chrom(VI)-Gehalt von weniger als 0,0003 Gew.-%, bezogen auf die Masse der Lederfalzspäne, auf, bestimmt nach DIN EN ISO 17075.

**M1) Trocknung der Lederfalzspäne**

Die Lederfalzspäne wurden vor der Verwendung in Schritt a) für 24 Stunden bei 40 °C in einem Vakuumtrockenofen bei einem Druck von 50 mbar getrocknet.

**M2) Bestimmung des Extraktionsgrades $R_E$**

Der Extraktionsgrad $R_E$ ist ein Maß für die Extraktion des Chroms aus dem Leder und wurde über folgende Formel bestimmt:

$$R_E = 1\text{-}(m(\text{kollagenhaltiges Material})/\ m(\text{Chrom-haltiges, kollagenhaltiges Material}))$$

wobei:

m(kollagenhaltiges Material) die Masse an Chrom im kollagenhaltigen Material erhalten nach Schritt d) ist (in Gew.-%, berechnet aus gemäß Methode M5a ermitteltem Chromgehalt), und

m(Chrom-haltiges, kollagenhaltiges Material) die Masse an Chrom in den in Schritt a) eingesetzten Lederfalzspänen ist (in Gew.-%, berechnet aus gemäß Methode M5a ermitteltem Chromgehalt).

m(Chrom-haltiges, kollagenhaltiges Material) betrug in den für die folgenden Beispiele eingesetzten und nach Methode M1 getrockneten Lederfalzspänen 2,22 Gew.-%.

$R_E$ = 1 : Komplette Extraktion
$R_E$ = 0 : Keine Extraktion

Die Bestimmung des Chrom-Gehaltes vor der Extraktion sowie nach der Extraktion erfolgte durch die Methode M5a.

**M3) Bestimmung des Regenerationsgrades $R_R$**

Der Regenerationsgrad $R_R$ des Chroms wurde über folgende Formel bestimmt:

$$R_R = (m(\text{wässrig})/\ m(\text{Extraktionsphase}))$$

m(wässrig) ist die Masse an Chrom in der wässrigen $CrSO_4$-Phase erhalten nach Schritt f) (in Gew.-%, bestimmt nach Methode M5b), und

m(Extraktionsphase) ist die Masse an Chrom in der organischen Phase erhalten nach Schritt c) (in Gew.-%, ermittelter Chrom-Gehalt der organischen Phase aus B9c): 1,90 Gew.-%, bestimmt nach Methode M5b).

$R_R$ = 1: Chrom ist vollständig in der wässrigen Phase
$R_R$ = 0: Kein Chrom ist in der wässrigen Phase nachweisbar - Keine Regeneration

**M4) Bestimmung der Schrumpfungstemperatur $T_S$**

Die Schrumpfungstemperatur der Lederfalzspäne wurde durch DSC-Messungen mit dem dynamischen Differenzkalorimeter DSC 204 F1 Phoenix® der Marke Netsch vermessen.

Zur Probenvorbereitung wurden die Proben vor der Messung 24 Stunden in destilliertes Wasser eingelegt (somit lagen wassergequollene Proben vor) und dann im Temperaturbereich von -10 °C bis 120 °C mit einer Heizrate

von 5 °C. $min^{-1}$ vermessen.

Die für die Beispiele verwendeten, noch nicht nach dem erfindungsgemäßen Verfahren entchromten Lederfalzspäne wiesen eine Schrumpfungstemperatur $T_S$ = 107,0 °C auf.

Reines Kollagen, das wassergequollen vorliegt, weist eine Schrumpfungstemperatur von $T_S$ = 67 °C auf (Fachzeitschrift "Das Leder", 29. Jahrgang, Nr. 3, März 1978, S. 38).

**M5) Bestimmung des Chrom-Gehaltes**

**M5a)** Das (Chrom-haltige) kollagenhaltige Material wurde für 1 Stunde im Vakuum (kleiner als 0,1 mbar) bei 55 °C getrocknet und anschließend eine genau definierte Menge der getrockneten Probe (meist 100 mg) eingewogen. Die Probe wurde mit 1 mL 65 %-iger Salpetersäure und 1 mL 96 %-iger Schwefelsäure vermischt und bei 65 °C erhitzt bis eine homogene Flüssigkeit vorlag. Die Probe wurde mit destilliertem Wasser auf 100 mL aufgefüllt und 1 mL davon per optischer Emissionsspektrometrie mittels induktiv gekoppelten Plasmas (ICP OES, inductively coupled plasma optical emission spectrometry) vermessen. Hierzu wurde ein ICP-OES-Spektrometer vom Typ Ciros CCD der Marke Spectro verwendet. Der Chrom-Gehalt wurde anhand der Wellenlängen 205 nm, 267 nm und 283 nm bestimmt.

**M5b)** Ein definiertes Volumen (ca. 1 mL) einer wässrigen Probe wurde mit einer definierten Menge an destilliertem Wasser auf ein bekanntes Probenvolumen (meist 15 mL) aufgefüllt. 1 mL dieser Lösung wurde per ICP OES vermessen. Hierzu wurde ein ICP-OES-Spektrometer vom Typ Ciros CCD der Marke Spectro verwendet. Der Chrom-Gehalt wurde anhand der Wellenlängen 205 nm, 267 nm und 283 nm bestimmt.

**2. Allgemeine Durchführung**

**A) Herstellung einer wässrigen Mischung des Extraktionsmittels**

1,0 Äquivalente Bis(2,4,4-trimethylpentyl)-phosphinsäure wurden bei 0 °C mit 1,05 Äquivalenten Ammoniak in einer 32%igen wässrigen Lösung versetzt und 3 Stunden gerührt. Die hochviskose Reaktionsmischung wurde gelegentlich mit destilliertem Wasser verdünnt, um ein Rühren zu ermöglichen. Der komplette Umsatz der Bis(2,4,4-trimethylpentyl)-phosphinsäure wurde mittels $^{31}P$-NMR-Spektroskopie nachgewiesen.

**B) Extraktion des Chroms aus Lederfalzspänen (Schritt a-d)**

Schritt a)

Die gemäß Methode M1 vorbehandelten Lederfalzspäne (5 g Probe mit einem Chrom-Gehalt von 2,22 Gew.-%) wurden mit der 20-fachen Menge destilliertem Wasser (bezogen auf die Masse der Lederfalzspäne) vermengt und auf eine Temperatur $T_E$ erhitzt. Anschließend wurde eine gewählte Anzahl an Moläquivalenten, bezogen auf 1 Moläquivalent Chrom in den Lederfalzspänen, des Extraktionsmittels aus Beispiel A in einer wässrigen Mischung zugegeben, der pH-Wert mit 99%iger Essigsäure auf pH = 5 eingestellt und das Reaktionsgemisch für eine Zeit $t_E$ weiter gerührt (siehe Tabelle 1).

Schritt b)

Nach der Zeit $t_E$ wurde die Reaktionsmischung aus Schritt a) im Eisbad abgekühlt, um die Reaktion zu stoppen. Es wurden 2,5 mL 75%iger Schwefelsäure bei Raumtemperatur (ca. 22 °C) nach der Extraktion aus Schritt a) zum zweiphasigen Extraktionsgemisch gegeben und das Gemisch 60 Minuten gerührt.

Schritt c)

Im Anschluss wurde die organische Phase durch Dekantieren von der wässrigen Phase abgetrennt.

Schritt d)

Das kollagenhaltige Material wurde durch Dekantieren oder Filtrieren aus der wässrigen Phase isoliert, gewaschen, getrocknet und der Extraktionsgrad $R_E$ gemäß Methode M2 bestimmt. Im Anschluss wurde die Schrumpfungstemperatur $T_S$ gemäß Methode M4 sowie der Chrom-Gehalt gemäß Methode M5a des kollagenhaltigen Materials bestimmt (siehe Tabelle 1, Beispiele B1-8).

Mehrfachextraktion

Die Beispiele B9a bis B9c wurden gemäß Prozedur B durchgeführt. In Beispiel B9b wurde das kollagenhaltige Material aus Beispiel B9a in Prozedur B eingesetzt. In Beispiel B9c wurde das kollagenhaltige Material aus Beispiel B9b in Prozedur B eingesetzt.

Tabelle 1: Entchromung von Lederfalzspänen

| Beispiel | $T_E$ [°C] | Moläquivalente Extraktionsmittel | $t_E$ [min] | $R_E$ | $T_S$ [°C] | Chrom-Gehalt [Gew.-%] |
|---|---|---|---|---|---|---|
| **B1** | 50 | 9 | 20 | 0,40 | n.g.[1] | 1,34 |
| **B2** | 50 | 9 | 30 | 0,60 | n.g.[1] | 0,89 |
| **B3** | 60 | 9 | 20 | 0,45 | 72,6 | 1,22 |
| **B4** | 60 | 9 | 30 | 0,64 | 65,4 | 0,79 |
| **B5** | 70 | 9 | 20 | 0,37 | 72,2 | 1,4 |
| **B6** | 70 | 9 | 30 | 0,74 | 71,4 | 0,57 |
| **B7** | 80 | 9 | 20 | 0,34 | 69,6 | 1,46 |
| **B8** | 80 | 9 | 30 | 0,78 | 50,7 | 0,48 |
| **B9a** | 70 | 3 | 30 | 0,46 | n.g.[1] | 1,2 |
| **B9b** | 70 | 3 | 30 | 0,67 | n.g.[1] | 0,74 |
| **B9c** | 70 | 3 | 30 | 0,75 | n.g.[1] | 0,57 |
| [1]n.g.: nicht gemessen | | | | | | |

Die Ergebnisse von Tabelle 1 konnten mit Lederfalzspänen, die nicht zuvor gemäß Methode M1 vorbehandelt worden waren, reproduziert werden.

**C) Regeneration des Extraktionsmittels in Form einer wässrigen Mischung (Schritte e bis g)**

Zu 2,7 mL der organischen Phase erhalten nach Abtrennung der wässrigen Phase unter Prozedur B) nach Schritt c) (Beispiel B9c), wurde Schwefelsäure (25-75%ig, 9 Moläquivalente bezogen auf 1 Moläquivalent Chrom in der organischen Phase, Chrom-Gehalt bestimmt gemäß Methode M5b) gegeben, die Reaktionsmischung auf eine Temperatur $T_R$ erhitzt und für eine Zeit $t_R$ bei der Temperatur $T_R$ gerührt (Tabelle 2, Beispiele C1 bis C9). Im Anschluss wurde die organische Phase durch Dekantieren von der wässrigen Phase abgetrennt und mit destilliertem Wasser gewaschen. Nach dem Trocknen unter vermindertem Druck (kleiner als 1 mbar) bei 55 °C lag die Präkursor-Säure des Extraktionsmittels, Bis(2,4,4-trimethylpentyl)-phosphinsäure, vor. Der Regenerationsgrad $R_R$ wurde nach Methode M3 bestimmt. Das Extraktionsmittel wurde wie in Beispiel A aufgeführt als wässrige Mischung wiedergewonnen.

Tabelle 2: Regeneration des Extraktionsmittels

| Beispiel | $T_R$ [°C] | $t_R$ [min] | Konzentration $H_2SO_4$ [%] | $R_R$ | $H_2SO_4$ [mL] |
|---|---|---|---|---|---|
| **C1** | 60 | 60 | 75 | 0,56 | 1,0 |
| **C2** | 70 | 60 | 75 | 0,67 | 1,0 |
| **C3** | 80 | 60 | 25 | 0,36 | 1,5 |
| **C4** | 80 | 60 | 35 | 0,35 | 1,4 |
| **C5** | 80 | 60 | 50 | 0,52 | 1,2 |
| **C6** | 80 | 60 | 75 | 0,71 | 1,0 |
| **C7** | 80 | 90 | 75 | 0,80 | 1,0 |
| **C8** | 80 | 120 | 75 | 0,85 | 1,0 |
| **C9** | 80 | 180 | 75 | 0,92 | 1,0 |

In der wässrigen Phase verblieb Chromsulfat, welches im Anschluss zu Chromgerbstoff weiterverarbeitet werden kann.

## Patentansprüche

1. Verfahren zur Entchromung von Chrom-haltigem, kollagenhaltigem Material, bevorzugt Chrom-haltigem Leder, unter Verwendung eines Extraktionsmittels, **dadurch gekennzeichnet, dass** das Extraktionsmittel eine Verbindung der Formel I oder eine Mischung aus mehreren Verbindungen der Formel I ist:

$K^+ A^-$ Formel I

wobei

$K^+$ ein Kation ist, welches ausgewählt ist aus der Gruppe bestehend aus Ammonium-, Iminium-, Phosphonium- und Sulfonium-Ion, und
$A^-$ ein Anion ist, welches ausgewählt ist aus der Gruppe bestehend aus Phosphat-, Phosphonat-, Phosphinat-, Borat-, Sulfat-, Sulfonat-, Amid-, Imid-, Carben-, Carboxylat- und Carbonat-Ion, bevorzugt ausgewählt aus der Gruppe bestehend aus Phosphat-, Phosphonat-, Phosphinat-, Thiophosphat-, Thiophosphonat- und Thiophosphinat-Ion.

2. Verfahren gemäß Anspruch 1, **dadurch gekennzeichnet, dass** das Extraktionsmittel eine Verbindung der Formel Ia oder eine Mischung aus mehreren Verbindungen der Formel Ia ist:

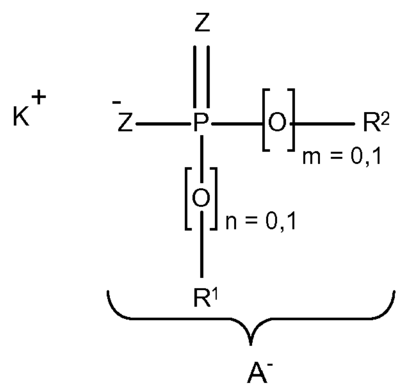

Formel Ia

wobei

$K^+$ ausgewählt ist aus der Gruppe bestehend aus

- Ammonium-Ion, bevorzugt Pyrrolidinium-Ion, Tetraethylammonium-Ion, (2-Hydroxyethyl)trimethylammonium-Ion (Cholin), Tetrapropylammonium-Ion, Tetramethylammonium-Ion, Tetrabutylammonium-Ion und Ammonium-Ion der Formel $[NH_4]^+$, besonders bevorzugt Ammonium-Ion der Formel $[NH_4]^+$,
- Iminium-Ion, bevorzugt Pyridinium-Ion und Imidazolium-Ion,
- Phosphonium-Ion, bevorzugt quartäres Phosphonium-Ion, besonders bevorzugt Tetramethylphosphonium-Ion, Tetraethylphosphonium-Ion, Tetrapropylphosphonium-Ion und Tetrabutylphosphonium-Ion, und
- Sulfonium-Ion,

Z = O oder S ist, bevorzugt O, und
$R^1$ und $R^2$ unabhängig voneinander ausgewählt sind aus der Gruppe bestehend aus Wasserstoff, $C_1$-$C_{20}$-Alkyl, das substituiert oder unsubstituiert ist und gegebenenfalls Polyalkylenglykol-, Polyurethan- und/oder Polyestereinheiten enthält, $C_2$-$C_{20}$-Alkenyl, das substituiert oder unsubstituiert ist und eine oder mehrere Doppelbindungen enthält, $C_2$-$C_{20}$-Alkinyl, das substituiert oder unsubstituiert ist und eine oder mehrere Dreifachbindungen enthält, $C_3$-$C_{20}$-Aryl, das substituiert oder unsubstituiert ist, Heteroaryl, das substituiert oder unsubstituiert ist, fünf- bis zwanzig-gliedrig ist und ein oder mehrere Heteroatome enthält, $C_3$-$C_{14}$-Cycloalkyl, das substituiert oder unsubstituiert ist, Heterocycloalkyl, das substituiert oder unsubstituiert ist, drei- bis acht-gliedrig ist und

ein oder mehrere Heteroatome enthält, und Polyalkylenglykolyl, wobei $R^1$ und $R^2$ auch gemeinsam mit der O-P-O-Einheit oder P-O-Einheit oder dem P-Atom, an die/das sie gebunden sind, einen gegebenenfalls aromatischen Heterozyklus ausbilden können, der bevorzugt fünf- bis acht-gliedrig ist, der neben Kohlenstoff die O-P-O-Einheit oder P-O-Einheit oder das P-Atom und gegebenenfalls weitere Heteroatome enthält, der gegebenenfalls eine oder mehrere Doppel- und/oder Dreifachbindungen enthält, und der substituiert oder unsubstituiert ist.

**3.** Verfahren gemäß einem der Ansprüche 1 oder 2, **dadurch gekennzeichnet, dass** das Extraktionsmittel eine ionische Flüssigkeit ist.

**4.** Verfahren gemäß einem der Ansprüche 1 bis 3, **dadurch gekennzeichnet, dass** eine wässrige Mischung des Extraktionsmittels eingesetzt wird.

**5.** Verfahren gemäß einem der Ansprüche 1 bis 4, **dadurch gekennzeichnet, dass** das Kation $K^+$ ausgewählt ist aus der Gruppe bestehend aus Ammonium-Ion und Iminium-Ion, bevorzugt bestehend aus 1,3-Dimethylimidazolium-Ion, 1-Ethyl-3-methylimidazolium-Ion und dem Ammonium-Ion der Formel $[NH_4]^+$, besonders bevorzugt bestehend aus dem Ammonium-Ion der Formel $[NH_4]^+$.

**6.** Verfahren gemäß einem der Ansprüche 2 bis 5, **dadurch gekennzeichnet, dass** in Formel Ia

- n, m = 0 und Z = O

sind.

**7.** Verfahren gemäß einem der Ansprüche 1 bis 6, **dadurch gekennzeichnet, dass** das Extraktionsmittel ausgewählt ist aus der Gruppe bestehend aus Ammonium-dibutylphosphat, Ammonium-bis(2-ethylhexyl)phosphat und Ammonium-bis(2,4,4-trimethylpentyl)-phosphinat, bevorzugt bestehend aus Ammonium-bis(2,4,4-trimethylpentyl)-phosphinat.

**8.** Verfahren gemäß einem der Ansprüche 1 bis 7, **dadurch gekennzeichnet, dass** das Extraktionsmittel in einem Verhältnis von größer als 2 : 1, bevorzugt größer als 5 : 1, besonders bevorzugt größer als 8 : 1, bezogen auf ein Moläquivalent Chrom(III) in dem Chrom-haltigen, kollagenhaltigen Material, eingesetzt wird.

**9.** Verfahren gemäß einem der Ansprüche 1 bis 8, **dadurch gekennzeichnet, dass** es die Schritte

a) Umsetzung des Chrom-haltigen, kollagenhaltigen Materials, bevorzugt Chrom-haltigen Leders, bei einem pH-Wert von 3 bis 6, bevorzugt 3,5 bis 5,5, mit dem Extraktionsmittel,
b) Zufügen von Schwefelsäure zu dem Reaktionsgemisch erhalten nach Schritt a) bei einer Temperatur von weniger als 30 °C, bevorzugt von weniger als 25 °C,
c) Trennung der organischen Phase und der wässrigen Phase erhalten nach Schritt b), und gegebenenfalls
d) Isolierung des kollagenhaltigen Materials aus der wässrigen Phase erhalten nach Schritt c)

enthält.

**10.** Verfahren gemäß Anspruch 9, **dadurch gekennzeichnet, dass** Schritt a) bei einer Temperatur von 45 bis 90 °C, bevorzugt bei einer Temperatur von 65 bis 85 °C, erfolgt.

**11.** Verfahren gemäß Anspruch 9 oder 10, **dadurch gekennzeichnet, dass** sich dem Schritt c) die weiteren Schritte

e) Umsetzung der organischen Phase erhalten nach Schritt c) mit Schwefelsäure, bevorzugt bei einer Temperatur von 60 bis 90 °C, besonders bevorzugt bei einer Temperatur von 65 bis 85 °C,
f) Trennung der organischen Phase, enthaltend die Präkursor-Säure des Extraktionsmittels, und der wässrigen Phase, enthaltend Chrom(III)-sulfat, erhalten nach Schritt e),
g) Isolierung der Präkursor-Säure des Extraktionsmittels aus der organischen Phase erhalten nach Schritt f),
h) Regeneration des Extraktionsmittels durch Umsetzung der nach Schritt g) erhaltenen Präkursor-Säure des Extraktionsmittels mit entsprechenden Komponenten, die in der Lage sind, bei Reaktion mit der Präkursor-Säure des Extraktionsmittels Kationen $K^+$ bereitzustellen, und
i) Wiedereinsetzung des nach Schritt h) erhaltenen Extraktionsmittels in Schritt a)

anschließen.

**12.** Verfahren gemäß Anspruch 11, **dadurch gekennzeichnet, dass** die Umsetzung in Schritt h) mit Ammoniak, bevorzugt mit einer wässrigen Ammoniak-Lösung, bei einer Temperatur von weniger als 10 °C, bevorzugt bei einer Temperatur von weniger als 5 °C, erfolgt.

**13.** Kollagenhaltiges Material, erhalten nach einem der Ansprüche 1 bis 12, **dadurch gekennzeichnet, dass** es einen Chrom(III)-Gehalt von weniger als 1,5 Gew.-%, bevorzugt weniger als 1 Gew.-%, besonders bevorzugt von weniger als 0,6 Gew.-%, bezogen auf die Masse des kollagenhaltigen Materials, aufweist.

**14.** Kollagenhaltiges Material, erhalten nach einem der Ansprüche 1 bis 12, **dadurch gekennzeichnet, dass** es eine Schrumpfungstemperatur von weniger als 75 °C, bevorzugt von weniger als 70 °C aufweist.

**15.** Verwendung des kollagenhaltigen Materials gemäß einem der Ansprüche 13 oder 14, im Bereich der Kosmetik, der Medizin, der Nahrungsmittel und/oder zur Herstellung von Hilfsmitteln, bevorzugt von Lederhilfsmitteln, besonders bevorzugt von Lederhilfsmitteln zur Nachgerbung von Leder.

Europäisches Patentamt
European Patent Office
Office européen des brevets

# EUROPÄISCHER RECHERCHENBERICHT

Nummer der Anmeldung
EP 14 16 6045

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br>A | WO 98/03685 A1 (LASEK WOJCIECH [PL]; GAJEWSKI MIECZYSDAW [PL]; MAJEWSKA URSZULA [PL];) 29. Januar 1998 (1998-01-29)<br>* Seite 1, Absatz 1 *<br>* Seite 5, Absatz 2 - Seite 7, Absatz 3 *<br>* Beispiele I-IV *<br>----- | 1,4,5,8, 9,13-15<br><br><br>2,3,6,7, 10-12 | INV.<br>C14C3/32<br>C14C3/00<br>C09H3/00 |
| X<br><br><br><br><br><br><br>A | DATABASE WPI<br>Week 201361<br>Thomson Scientific, London, GB;<br>AN 2013-L78182<br>XP002730313,<br>& BR PI1 000 015 A2 (UNIV FEDERAL LAVRAS) 15. Januar 2013 (2013-01-15)<br>* das ganze Dokument *<br>----- | 1,4,5, 13-15<br><br><br><br><br><br><br>2,3,6-12 | |
| X | BARBARA WIONCZYK ET AL: "Recovery of chromium(III) from wastes of uncolored chromium leathers. Part II. Solvent extraction of chromium(III) from alkaline protein hydrolyzate",<br>SEPARATION AND PURIFICATION TECHNOLOGY,<br>Bd. 81, Nr. 2, 22. Juli 2011 (2011-07-22), Seiten 237-242, XP028281823,<br>ISSN: 1383-5866, DOI: 10.1016/J.SEPPUR.2011.07.024<br>[gefunden am 2011-07-22]<br>* das ganze Dokument *<br>----- | 13-15 | RECHERCHIERTE SACHGEBIETE (IPC)<br>C14C<br>C09H |
| X | DATABASE WPI<br>Week 201434<br>Thomson Scientific, London, GB;<br>AN 2014-F69608<br>XP002730370,<br>& CN 103 554 247 A (UNIV DALIAN POLYTECHNIC) 5. Februar 2014 (2014-02-05)<br>* Zusammenfassung *<br>----- | 13-15 | |

Der vorliegende Recherchenbericht wurde für alle Patentansprüche erstellt

3

| Recherchenort | Abschlußdatum der Recherche | Prüfer |
|---|---|---|
| München | 30. September 2014 | Neugebauer, Ute |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 14 16 6045

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2014

| Im Recherchenbericht angeführtes Patentdokument | Datum der Veröffentlichung | Mitglied(er) der Patentfamilie | Datum der Veröffentlichung |
|---|---|---|---|
| WO 9803685 A1 | 29-01-1998 | AU 3363897 A<br>PL 315360 A1<br>WO 9803685 A1 | 10-02-1998<br>19-01-1998<br>29-01-1998 |
| BR PI1000015 A2 | 15-01-2013 | KEINE | |
| CN 103554247 A | 05-02-2014 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0132906 A2
- WO 9314170 A1


### In der Beschreibung aufgeführte Nicht-Patentliteratur


- **CABEZA, L.F.** *Waste Management,* 1998, vol. 18, 211-218
- *Das Leder,* Marz 1978, vol. 29 (3), 38